# EUROPEAN PATENT SPECIFICATION

(11) **EP 3 332 636 B1**
(45) Date of publication and mention of the grant of the patent: **06.03.2019**
(21) Application number: 16203384.9
(22) Date of filing: 12.12.2016
(51) Int. Cl.: A01K 11/00, A01K 35/00, G07C 1/26

(54) **POSITION TRACKER**
POSITIONSTRACKER
ENREGISTREUR DE POSITION

(43) Date of publication of application: 13.06.2018
(73) Proprietor: Min Xin Technology Corp., Taichung City 420 (TW)
(72) Inventor: Kao, Shu-Hui, Taichung City 420 (TW)
(74) Representative: Becker Kurig Straus

(56) References cited:
- CN-U- 202 305 813
- TW-U- M 508 902

## Description

### BACKGROUND OF THE INVENTION

### Technical Field

The present invention relates to trackers and, more particularly, to a tracker adapted for recording the course of flight of birds.

### 2. Description of Related Art

For years businessmen run profit-making long-distance pigeon races worldwide, making use of pigeons' homing ability. Therefore, leg rings or trackers worn by the racing pigeons are of vital importance, because the leg rings or trackers not only perceive and record related information (such as places and time) about the racing pigeons' course of flight from a departure place to a destination, but also calculate the flight distance between the departure place and the destination as well as the racing pigeons' speeds during the flight. Furthermore, the leg rings or trackers not only discern the racing pigeons but also determine whether the racing pigeons are swapped during the races.

Conventional techniques for timing racing pigeons with electronic leg rings or trackers are noncontroversial and thus acceptable to most racing pigeon breeders and pigeon race organizers. For instance, Taiwan patent M508902, entitled Racing Pigeon's Leg Ring with Wireless Positioning Device, discloses a racing pigeon's leg ring with a wireless positioning device, comprising: an arcuate casing (10) having an inner ring wall (11) and two end portions, with the end portions being provided with a first pivoting portion (12) and a first engaging portion (13), respectively, and the arcuate casing (10) having therein a receiving chamber (14) and a battery chamber (15); a movable element (20) having a blocking surface (21) and two end portions, with the end portions being provided with a second pivoting portion (22) and a second engaging portion (23), respectively, and the second pivoting portion (22) being pivotally connected to the first pivoting portion (12) of the arcuate casing (10); and a wireless positioning device (30) disposed in the receiving chamber (14) of the arcuate casing (10), wherein an opening is disposed at the receiving chamber (14) of the arcuate casing (10), a lid (16) is disposed on the opening of the receiving chamber (14), an opening is disposed at the battery chamber (15) of the arcuate casing (10), and a battery cover (18) is disposed on the opening of the battery chamber (15).

Although the aforesaid racing pigeon's leg ring with a wireless positioning device as disclosed in Taiwan patent M508902 U perceives and records easily related information about the racing pigeons' course of flight from a departure place to a destination during pigeon races by the tracking and locating functions of the wireless positioning device, it still has room for improvement. For instance, if a pigeon race is held at sea, plenty of seawater and moisture will be adsorbed to the leg ring or tracker and then seep into the receiving chamber and the battery chamber through a gap, such as a joint between the lid and the opening of the receiving chamber or a joint between the battery cover and the opening of the battery chamber. As a result, a short circuit develops between the wireless positioning device in the receiving chamber and a power supply component in the battery chamber and thus damages the leg ring or tracker. Since the leg ring or tracker gets damaged, race-related data stored in the leg ring or tracker becomes lost, compromising the accuracy in the race results and the fairness of the pigeon race. Furthermore, race-related data stored in the leg ring or tracker cannot be accurately read with an external data device, thereby compromising the correctness of the data thus read.

Accordingly, it is imperative to provide a tracker which overcomes the aforesaid drawbacks of the prior art.

### SUMMARY OF THE INVENTION

In view of the aforesaid drawbacks of the prior art, it is an objective of the present invention to provide a tracker adapted for recording the course of flight of racing birds. The tracker is capable of performing a waterproofing function which can be switched to an internal power supplying function, an external charging function, and a data transmission function by a switch to transmit race-related data before, during, and after a race and provide a power source. Hence, the tracker not only reduces the likelihood of a loss of race-related data otherwise stored in the tracker but also enhances the accuracy in the race results and the fairness of the race.

In order to achieve the above and other objectives, the present invention provides a tracker adapted for recording the course of flight of racing birds, comprising a body, a movable element, a circuit module, a power source module, and a switch.

The body has a receiving space and a through hole, with the through hole being in communication with the receiving space. Two ends of the body form a pivoting portion and a first engaging portion, respectively. The body has a first electrically conductive portion and a second electrically conductive portion which are disposed respectively in the receiving space.

The movable element has an end pivotally connected to the pivoting portions of the body and the other end with a second engaging portion corresponding in position to the first engaging portion of the body. The second engaging portion and the first engaging portion of the body are engaged with each other and fixed to each other as soon as the movable element is pivotally connected to the pivoting portions of the body.

The circuit module is disposed on one side in the receiving space of the body. The circuit module comprises a wireless positioning unit and a memory unit, with the wireless positioning unit adapted to track and locate the tracker, process related data, and store the data in the memory unit.

The power source module is disposed on the other side in the receiving space of the body and has one end electrically connected to the second electrically conductive portion.

The switch is concealingly disposed at the through hole of the body.

The switch is electrically connected to the first electrically conductive portion and the second electrically conductive portion when pivoted to a first position such that the power source module forms an electrical loop together with the first electrically conductive portion of the body through the switch and is electrically connected to an external supply power source.

Preferably, the body has a third electrically conductive portion. The switch is electrically connected to the second electrically conductive portion and the third electrically conductive portion when pivoted to a second position such that the power source module forms an electrical loop together with the circuit module through the switch, thereby supplying power to the circuit module. The switch is electrically connected to the third electrically conductive portion and the first electrically conductive portion when pivoted to a third position such that the circuit module forms an electrical loop together with the first electrically conductive portion of the body through the switch and is electrically connected to the external supply power source, thereby supplying power to the circuit module.

### BRIEF DESCRIPTION OF THE DRAWINGS

FIG. 1 is a perspective view of a tracker according to the first preferred embodiment of the present invention;
FIG. 2 is a front view of the tracker according to the first preferred embodiment of the present invention;
FIG. 3 is a rear view of the tracker according to the first preferred embodiment of the present invention;
FIG. 4 is an exploded front view of the tracker according to the first preferred embodiment of the present invention;
FIG. 5 is an exploded rear view of the tracker according to the first preferred embodiment of the present invention;
FIG. 6 is a partial exploded front view the tracker according to the first preferred embodiment of the present invention;
FIG. 7 is a cutaway top view the tracker according to the first preferred embodiment of the present invention;
FIG. 8 is a cross-sectional view taken of the tracker along line 8-8 of FIG. 7, showing the first position;
FIG. 9 is a cross-sectional view of the tracker according to the first preferred embodiment of the present invention, showing the second position;
FIG. 10 is a cross-sectional view of the tracker according to the first preferred embodiment of the present invention, showing the third position; and
FIG. 11 is a perspective view of another tracker according to the second preferred embodiment of the present invention.

### DETAILED DESCRIPTION OF THE EMBODIMENT OF THE INVENTION

Structural features and anticipated advantages of the present invention are illustrated by preferred embodiments and accompanying drawings, and described below. Identical reference numerals used in the preferred embodiments and the drawings denote identical or similar elements, components, objects, structures, systems, frameworks, devices, process flows, methods, or steps.

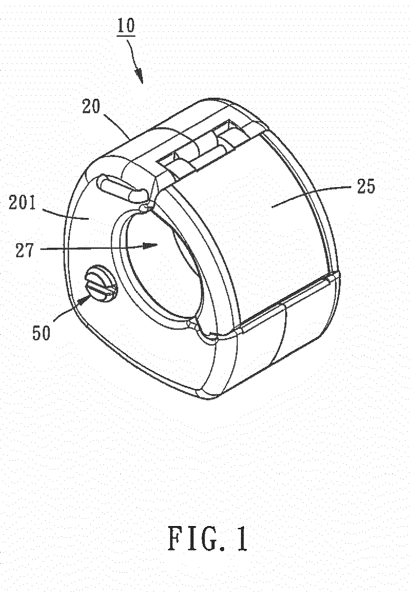

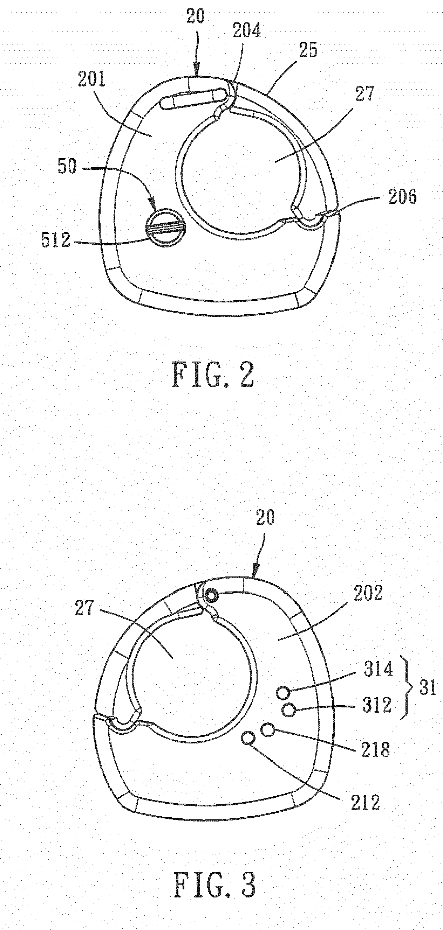

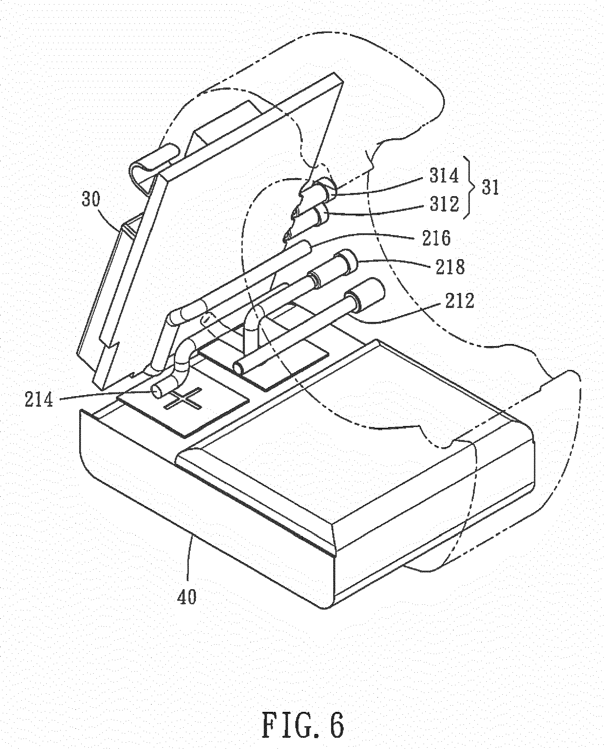

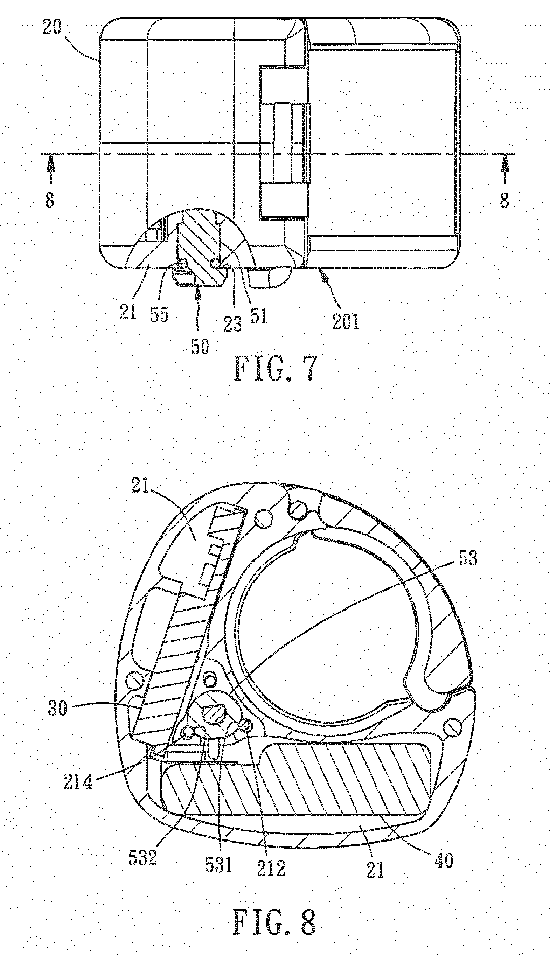

Referring to FIG. 1 through FIG. 7, the present invention provides a tracker 10 adapted for recording the course of flight of racing birds. The tracker 10 comprises an arcuate body 20, a movable element 25, a circuit module 30, a power source module 40, and a switch 50.

The arcuate body 20 has a first side 201, a second side 202 corresponding in position to the first side 201, a receiving space 21, and a through hole 23. A pivoting portion 204 and a first engaging portion 206 are disposed at two ends of the arcuate body 20, respectively. The through hole 23 is concavely disposed on the surface of the first side 201 of the arcuate body 20 and extends into the depth thereof so as to be in communication with the receiving space 21. The arcuate body 20 has therein a first electrically conductive portion 212, a second electrically conductive portion 214, a third electrically conductive portion 216, and a common grounding portion 218. In this embodiment, the first electrically conductive portion 212, the second electrically conductive portion 214, and the third electrically conductive portion 216 are each, for example, an electrically conductive post made of a metal (such as gold, silver, copper, iron, nickel, and palladium) or an alloy thereof, whereas the common grounding portion 218 is, for example, an electrically conductive pad made of a metal (such as gold, silver, copper, iron, nickel, and palladium) or an alloy thereof, to ensure the safe electrical loop grounding of internal circuits. Both the first electrically conductive portion 212 and the common grounding portion 218 are exposed from the second side 202 of the arcuate body 20.

The movable element 25 has one end pivotally connected to the pivoting portions 204 of the arcuate body 20 through a tongue 252. A second engaging portion 256 is disposed at the other end of the movable element 25 and corresponds in position to the first engaging portion 206 of the arcuate body 20. After the movable element 25 has been pivotally connected to the pivoting portions 204 of the arcuate body 20, the second engaging portion 256 and the first engaging portion 206 of the arcuate body 20 are engaged with each other and thus fixed to each other such that inner wall of the arcuate body 20 are continuous and thus defines a fitting hole 27 for fitting a bird's leg, neck, feature or beak in place.

The circuit module 30 is disposed on one side in the receiving space 21 of the arcuate body 20. One end of the circuit module 30 is a positive terminal and is electrically connected to the third electrically conductive portion 216. The other end of the circuit module 30 is a negative terminal and is electrically connected to the common grounding portion 218. The circuit module 30 comprises a wireless positioning unit (not shown), a memory unit (not shown), and a data transmitting portion 31. The wireless positioning unit not only tracks and locates the tracker but also processes pigeon race-related data (for example, determines the departure place and destination of a pigeon race, determines the starting time and ending time of a racing pigeon's flight, and calculates the flight distance between the departure place and destination as well as the racing pigeon's speed during the flight) and stores the resultant data in the memory unit. The data transmitting portion 31 has a data transmitting end 312 and a data receiving end 314. The data receiving end 314 and the data transmitting end 312 are exposed from the second side 202 of the arcuate body 20 and electrically connected to an external data transmitter (not shown) such that position-related data and other related data stored in the memory unit is received by the data receiving end 314 and transmitted by the data transmitting end 312 to the external data transmitter.

The power source module 40 is disposed on the other side in the receiving space 21 of the arcuate body 20. One end of the power source module 40 is a positive terminal and is electrically connected to the second electrically conductive portion 214. The other end of the power source module 40 is a negative terminal and is electrically connected to the common grounding portion 218. In this embodiment, the power source module 40 has an AC/DC convertor, a DC/DC convertor, or an AC/DC power management control (AC/DC PMC) to supply power to the tracker 10, but the present invention is not limited thereto.

The switch 50 is concealingly disposed at the through hole 23 of the arcuate body 20. The switch 50 has a post 51, an electrically conductive element 53, and a waterproof element 55. The electrically conductive element 53 has a limiting hole 530, a first electrically conductive end 531, and a second electrically conductive end 532. One end of the post 51 is exposed from the first side 201 of the arcuate body 20. The other end of the post 51 is engaged with the limiting hole 530 of the electrically conductive element 53. In this embodiment, for exemplary sake, the post 51 exposed from the first side 201 of the arcuate body 20 has a limiting slot 512 such that an external tool (such as a slotted screwdriver, a Phillips screwdriver, and a wrench) applicable to the limiting slot 512 of the post 51 is limited and fixed in place by a user to pivot the switch 50. The first electrically conductive end 531 and the second electrically conductive end 532 of the electrically conductive element 53 each take on a concave, arcuate shape and correspond in position to the first electrically conductive portion 212, the second electrically conductive portion 214, and the third electrically conductive portion 216 of the arcuate body 20. The first electrically conductive end 531 and the second electrically conductive end 532 of the electrically conductive element 53 are each, for example, an electrically conductive contact made of a metal (such as gold, silver, copper, iron, nickel, and palladium) or an alloy thereof, but the present invention is not limited thereto.

This embodiment of the present invention is distinguished from the prior art by technical features and obvious advantages as follows:

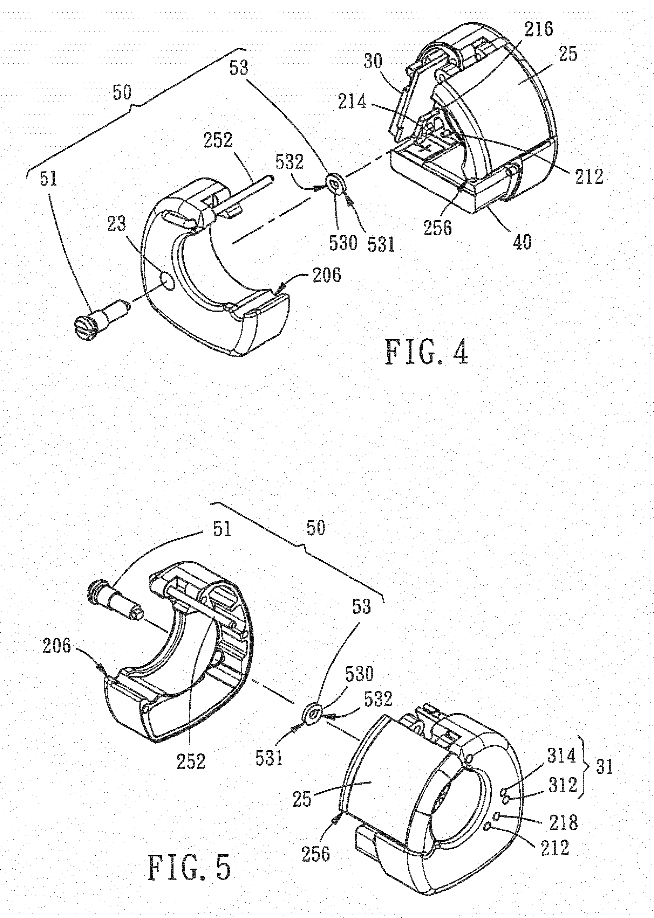

First, the tracker 10 has a switch capable of switching to a waterproofing function. Referring to FIGs. 4, 5, 7, the waterproof element 55 of the switch 50 encloses the post 51 of the switch 50. After the other end of the post 51 of the switch 50 has been penetratingly disposed at the through hole 23 of the arcuate body 20, the waterproof element 55 of the switch 50 is blockingly affixed to the inner wall of the through hole 23 of the arcuate body 20. Preferably, a waterproof film is applied to the junction of the waterproof element 55 of the switch 50 and the inner wall of the through hole 23 of the arcuate body 20, or the junction of the waterproof element 55 of the switch 50 and the receiving space 21 of the arcuate body 20. The waterproof film includes, but is not limited to, a compound, such as ethylene-vinyl acetate copolymer (EVA), polyvinyl chloride (PVC), polytetrafluoroethene (PTFE), low-density polyethylene (LDPE), and ethylene copolymer bitumen (ECB), or a constituent of the compound. Although plenty of seawater and moisture is adsorbed to the tracker 10 disclosed in this embodiment and worn by a racing pigeon in a pigeon race held at sea, the seawater and moisture does not seep into the receiving space 21. It is because, in this embodiment, both the circuit module 30 and the power source module 40 are disposed in the receiving space 21, only an end of the post 51 of the switch 50 is exposed from the first side 201 of the arcuate body 20. Even if external moisture intrudes into the arcuate body 20 through the through hole 23 thereof, the intruding moisture will be blocked by the waterproof element 55 of the switch 50 and thus will return to the outside of the arcuate body 20, thereby preventing the seawater and moisture from seeping into the receiving space 21. Preferably, the common grounding portion 218 and the first electrically conductive portion 212 of the arcuate body 20 as well as the data transmitting end 312 and the data receiving end 314 of the data transmitting portion 31 of the circuit module 30 undergo via filling such that the data transmitting end 312 and the data receiving end 314 of the data transmitting portion 31, which are made of an electrically conductive metal, are disposed in the arcuate body 20 and exposed from the second side 202 of the arcuate body 20 to lie flatly thereon. Therefore, the tracker 10 not only reduces the likelihood of a loss of race-related data otherwise stored in the tracker 10 but also enhances the accuracy in the race results and the fairness of the pigeon race.

Second, the tracker 10 has a switch capable of switching to an external charging function. Referring to FIGs. 4, 5, 6 and 8, the first electrically conductive end 531 and the second electrically conductive end 532 of the electrically conductive element 53 of the switch 50 abut against the first electrically conductive portion 212 and the second electrically conductive portion 214 of the arcuate body 20, respectively, when the switch 50 is pivoted to a first position. Since both the first electrically conductive portion 212 and the common grounding portion 218 are exposed from the second side 202 of the arcuate body 20, when the positive and negative voltage ends of an external supply power source (not shown) are electrically connected to the first electrically conductive portion 212 and the common grounding portion 218 of the arcuate body 20, respectively, the positive terminal of the power source module 40 is electrically connected to the second electrically conductive portion 214 to not only form an electrical loop together with the first electrically conductive portion 212 of the arcuate body 20 through the electrically conductive element 53 of the switch 50, but also form a charging loop together with the external supply power source, and in consequence a power storage unit of the power source module 40 can be charged to attain a predetermined voltage level and the required power level, thereby effectuating external power supply to the tracker 10 before and after a pigeon race.

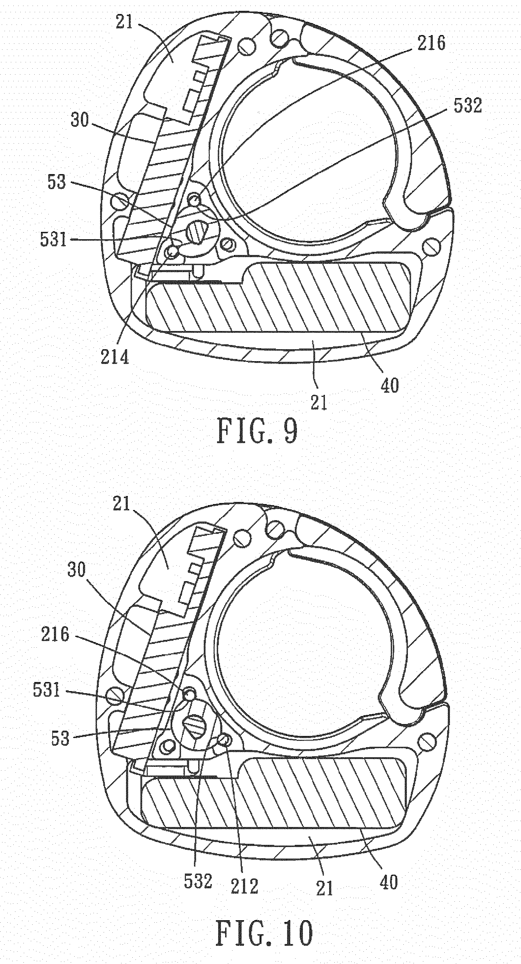

Third, the tracker 10 has a switch capable of switching to an internal power supplying function. Referring to FIGs. 4, 5, 6 and 9, the first electrically conductive end 531 and the second electrically conductive end 532 of the electrically conductive element 53 of the switch 50 abut against and connect with the second electrically conductive portion 214 and the third electrically conductive portion 216 of the arcuate body 20, respectively, when the switch 50 is pivoted to a second position. At this point in time, power initially stored in the power source module 40 is electrically connected to the circuit module 30 through the electrically conductive element 53 of the switch 50 and thus supplied to the circuit module 30, thereby effectuating internal power supply to the tracker 10 during a pigeon race.

Fourth, the tracker 10 has a switch capable of switching to a data transmission function. Referring to FIGs. 4, 5, 6 and 10, the first electrically conductive end 531 and the second electrically conductive end 532 of the electrically conductive element 53 of the switch 50 abut against and connect with the third electrically conductive portion 216 and the first electrically conductive portion 212 of the arcuate body 20, respectively, when the switch 50 is pivoted to a third position. Since both the first electrically conductive portion 212 and the common grounding portion 218 are exposed from the second side 202 of the arcuate body 20, when the positive and negative voltage ends of the external supply power source are electrically connected to the first electrically conductive portion 212 and the common grounding portion 218 of the arcuate body 20, respectively, the positive terminal of the circuit module 30 is electrically connected to the third electrically conductive portion 216 to form a power supplying loop together with the external supply power source through the electrically conductive element 53 of the switch 50, thereby supplying the power to the circuit module 30. Afterward, the data receiving end 314 and the data transmitting end 312 of the data transmitting portion 31 of the circuit module 30, which are exposed from the second side 202 of the arcuate body 20, are electrically connected to the external data transmitter to receive and transmit position-related data and other related data stored in the memory unit of the circuit module 30 to the external data transmitter, thereby effectuating the data transmission function of the tracker 10 before and after a pigeon race.

The technical features and advantages of the first preferred embodiment of the present invention are described above. The technical features and advantages of the second preferred embodiment of the present invention are described below.

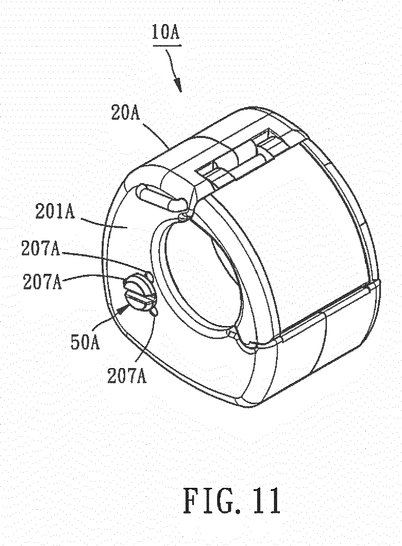

Referring to FIG. 11, another tracker 10A provided according to the second preferred embodiment of the present invention is distinguished from the tracker 10 provided according to the first preferred embodiment of the present invention by technical features described below.

At least one positioning portion 207A is concavely disposed on the surface of the first side 201A of the arcuate body 20A and extends into the depth thereof. In this embodiment, for exemplary sake, three adjacent positioning portions 207A are concavely disposed on the surface of the first side 201A of the arcuate body 20A and extends into the depth thereof, and thus achieve advantages described below.

First, the three adjacent positioning portions 207A enable the user to determine the positions of the first electrically conductive portion, the second electrically conductive portion, and the third electrically conductive portion of the arcuate body 20A on the inner wall of the receiving space, when assembling the tracker 10A.

Second, the three adjacent positioning portions 207A enable the user to determine the current positions of the first electrically conductive end and the second electrically conductive end of the electrically conductive element of the switch 50A such that the first electrically conductive end and the second electrically conductive end of the electrically conductive element of the switch 50A abut against the first electrically conductive portion and the second electrically conductive portion, the second electrically conductive portion and the third electrically conductive portion, or the third electrically conductive portion and the first electrically conductive portion, respectively, in order to pivot the switch 50A of the tracker 10A.

Last but not least, persons skilled in the art understand that the above description and preferred embodiments are illustrative of the present invention in terms of structures, methods, process flows and intended advantages, but are not restrictive of the claims of the present invention. Therefore, replacements or variations, which involve any other equivalent elements, components, objects, structures, devices, methods, and process flows, must fall within the scope of the appended claims.

## Claims

1. A tracker (10), comprising:
a body (20) having a receiving space (21) and a through hole (23), with the through hole (23) being in communication with the receiving space (21), the body (20) having two ends forming a pivoting portion (204) and a first engaging portion (206), respectively, the body (20) having a first electrically conductive portion (212) and a second electrically conductive portion (214) disposed in the receiving space (21);
a movable element (25) with an end pivotally connected to the pivoting portions (204) of the body (20) and another end having a second engaging portion (256) corresponding in position to the first engaging portion (206) of the body (20), wherein the second engaging portion (256) and the first engaging portion (206) of the body (20) are engaged with each other and fixed to each other as soon as the movable element (25) is pivotally connected to the pivoting portions (204) of the body (20);
a circuit module (30) disposed on a side in the receiving space (21) of the body (20), the circuit module (30) comprising a wireless positioning unit and a memory unit, with the wireless positioning unit adapted to track and locate the tracker, process related data, and store the data in the memory unit;
a power source module (40) disposed on another side in the receiving space (21) of the body (20) and having an end electrically connected to the second electrically conductive portion (214); and
a switch (50) disposed at the through hole (23) of the body (20),
wherein the switch (50) is electrically connected to the first electrically conductive portion (212) and the second electrically conductive portion (214) when pivoted to a first position such that the power source module (40) forms an electrical loop together with the first electrically conductive portion (212) of the body (20) through the switch (50) and is electrically connected to an external supply power source.

2. The tracker (10) of claim 1, wherein the body (20) has a third electrically conductive portion (216), and the switch (50) is electrically connected to the second electrically conductive portion (214) and the third electrically conductive portion (216) when pivoted to a second position such that the power source module (40) forms an electrical loop together with the circuit module (30) through the switch (50), thereby supplying power to the circuit module (30).

3. The tracker (10) of claim 2, wherein an end of the circuit module (30) is electrically connected to the third electrically conductive portion (216), and the switch (50) is electrically connected to the first electrically conductive portion (212) and the third electrically conductive portion (216) when pivoted to a third position such that the circuit module (30) forms an electrical loop together with the first electrically conductive portion (212) of the body (20) through the switch (50) and is electrically connected to the external supply power source, thereby supplying power to the circuit module (30).

4. The tracker (10) of claim 3, wherein the circuit module (30) further has a data transmitting portion (31) electrically connected to an external data transmitter, and the data transmitting portion (31) of the circuit module (30) is electrically connected to the external data transmitter through the switch (50) when the switch (50) is pivoted to the third position such that position-related data and other related data stored in the memory unit of the circuit module (30) is transmitted to the external data transmitter through the data transmitting portion (31).

5. The tracker (10) of claim 1, wherein the body (20) has a third electrically conductive portion (216), and the switch (50) is electrically connected to the first electrically conductive portion (212) and the third electrically conductive portion (216) when pivoted to a third position such that the circuit module (30) forms an electrical loop together with the first electrically conductive portion (212) of the body (20) through the switch (50) and is electrically connected to the external supply power source, thereby supplying power to the circuit module (30).

6. The tracker (10) of claim 5, wherein the circuit module (30) further has a data transmitting portion (31) electrically connected to an external data transmitter, and, when the switch (50) is pivoted to the third position, the data transmitting portion (31) of the circuit module (30) is electrically connected to the external data transmitter through the switch (50) such that position-related data and other related data stored in the memory unit of the circuit module (30) is transmitted to the external data transmitter through the data transmitting portion (31).

7. The tracker (10) of any one of claims 2-6, wherein the switch (50) has a post (51) and an electrically conductive element (53), with the electrically conductive element (53) having a limiting hole (530), a first electrically conductive end (531), and a second electrically conductive end (532), the post (51) having an end exposed from an outer side of the body (20) and another end engaged with the limiting hole (530) of the electrically conductive element (53), wherein the first electrically conductive end (531) and the second electrically conductive end (532) of the electrically conductive element (53) of the switch (50) abut against and connect with the first electrically conductive portion (212) and the second electrically conductive portion (214) of the body (20), respectively, when the switch (50) is pivoted to the first position, wherein the first electrically conductive end (531) and the second electrically conductive end (532) of the electrically conductive element (53) of the switch (50) abut against and connect with the second electrically conductive portion (214) and the third electrically conductive portion (216) of the body (20), respectively, when the switch (50) is pivoted to the second position, wherein the first electrically conductive end (531) and the second electrically conductive end (532) of the electrically conductive element (53) of the switch (50) abut against the third electrically conductive portion (216) and the first electrically conductive portion (212) of the body (20), respectively, when the switch (50) is pivoted to the third position.

8. The tracker (10) of claim 7, wherein the switch (50) has a waterproof element (55) for enclosing the post (51), wherein, after another end of the post (51) of the switch (50) has been penetratingly disposed at the through hole (23) of the body (20), the waterproof element (55) is blockingly affixed to an inner wall of the through hole (23) of the body (20).

9. The tracker (10) of claim 1, wherein the switch (50) has a post (51) and an electrically conductive element (53), with the electrically conductive element (53) having a limiting hole (530), a first electrically conductive end (531), and a second electrically conductive end (532), the post (51) having an end exposed from an outer side of the body (20) and another end engaged with the limiting hole 530 of the electrically conductive element (53), wherein the first electrically conductive end (531) and the second electrically conductive end (532) of the electrically conductive element (53) of the switch (50) abut against and connect with the first electrically conductive portion (212) and the second electrically conductive portion (214) of the body (20), respectively, when the switch (50) is pivoted to the first position.

10. The tracker (10) of claim 9, wherein the switch (50) has a waterproof element (55) for enclosing the post (51), wherein, after another end of the post (51) of the switch (50) has been penetratingly disposed at the through hole (23) of the body (20), the waterproof element (55) is blockingly affixed to an inner wall of the through hole (23) of the body (20).

11. The tracker (10A) of claim 8, wherein at least one positioning portion (207A) is concavely disposed on a surface of an outer side of the body 20A and extends into a depth thereof.

12. The tracker (10) of claim 4 or 6, wherein the data transmitting portion (31) has a data receiving end (314) and a data transmitting end (312) which are exposed from the body (20) and electrically connected to the external data transmitter to receive and transmit, respectively, position-related data and other related data stored in the memory unit to the data transmitter.

## Patentansprüche

1. Tracker (10), welcher umfasst:
einen Körper (20) mit einem Aufnahmeraum (21) und einem Durchgangsloch (23), worin das Durchgangsloch (23) mit dem Aufnahmeraum (21) in Verbindung steht, worin der Körper (20) zwei jeweils einen Drehbereich (204) und einen ersten Eingriffsbereich (206) ausbildende Enden aufweist, worin der Körper (20) einen in dem Aufnahmeraum (21) angeordneten, ersten elektrisch leitfähigen Bereich (212) und einen zweiten elektrisch leitfähigen Bereich (214) aufweist;
ein bewegbares Element (25) mit einem drehbar mit den drehbaren Bereichen (204) des Körpers (20) verbundenen Ende und einem anderen, einen in Position mit dem ersten Eingriffsbereich (206) des Körpers (20) entsprechenden zweiten Eingriffsbereich (256) ausgestatteten Ende, worin der zweite Eingriffsbereich (256) und der erste Eingriffsbereich (206) des Körpers (20) miteinander in Eingriff kommen und miteinander fest verbunden sind, sobald das bewegbare Element (25) mit den Drehbereichen (204) des Körpers (20) drehbar verbunden ist;
ein an einer Seite in dem Aufnahmeraum (21) des Körpers (20) angeordnetes Stromkreismodul (30), worin das Stromkreismodul (30) eine drahtlose Positionseinheit, und eine Speichereinheit aufweist, worin die drahtlose Positionseinheit angepasst ist, den Tracker zu verfolgen und zu lokalisieren, entsprechende Daten zu verarbeiten, und die Daten in der Speichereinheit zu speichern;
ein Stromquellenmodul (40), das an einer anderen Seite in dem Aufnahmeraum (21) des Körper (20) angeordnet ist und ein mit dem zweiten elektrisch leitfähigen Bereich (214) elektrisch verbundenes Ende aufweist; und
einen an dem Durchgangsloch (23) des Körpers (20) angeordneten Schalter (50), worin der Schalter (50) mit dem ersten elektrisch leitfähigen Bereich (212) und dem zweiten elektrisch leitfähigen Bereich (214) elektrisch verbunden ist, wenn er in eine erste Position gebracht wurde, so dass das Stromquellenmodul (40) zusammen mit dem ersten elektrisch leitfähigen Bereich (212) des Körper (20) einen geschlossenen Stromkreis über den Schalter (50) ausbildet und elektrisch mit einer externen Stromquelle verbunden ist.

2. Tracker (10) nach Anspruch 1, worin der Körper (20) einen dritten elektrisch leitfähigen Bereich (216) aufweist, und der Schalter (50) mit dem zweiten elektrisch leitfähigen Bereich (214) und dem dritten elektrisch leitfähigen Bereich (216) elektrisch verbunden ist, wenn er in eine zweite Position gebracht wurde, so dass das Stromquellenmodul (40) zusammen mit dem Stromkreismodul (30) über den Schalter (50) einen geschlossenen Stromkreis ausbildet, damit das Stromkreismodul (30) mit Energie versorgt wird.

3. Tracker (10) nach Anspruch 2, worin ein Ende des Stromkreismoduls (30) mit dem dritten elektrisch leitfähigen Bereich (216) elektrisch verbunden ist, und worin der Schalter (50) mit dem ersten elektrisch leitfähigen Bereich (212) und dem dritten elektrisch leitfähigen Bereich (216) elektrisch verbunden ist, wenn er in eine dritte Position gebracht wurde, so dass das Stromkreismodul (30) zusammen mit dem ersten elektrisch leitfähigen Bereich (212) des Körper (20) durch den Schalter (50) einen geschlossenen Stromkreis ausbildet, und elektrisch verbunden ist mit der externen Stromquelle, damit das Stromkreismodul (30) mit Energie versorgt wird.

4. Tracker (10) nach Anspruch 3, worin das Stromkreismodul (30) weiter einen mit einem externen Datenübermittler elektrisch verbundenen Daten-Übermittlungsbereich (31) aufweist, und worin der Daten-Übermittlungsbereich (31) des Stromkreismoduls (30) durch den Schalter (50) mit dem externen Datenübermittler elektrisch verbunden ist, wenn der Schalter (50) in die dritte Position gebracht wurde, so dass positionsbezogene Daten und andere zugehörige, in der Speichereinheit des Stromkreismoduls (30) gespeicherte Daten durch den Daten-Übermittlungsbereich (31) an den externen Datenübermittler übermittelt werden.

5. Tracker (10) nach Anspruch 1, worin der Körper (20) einen dritten elektrisch leitfähigen Bereich (216) aufweist, und worin der Schalter (50) mit dem ersten elektrisch leitfähigen Bereich (212) und dem dritten elektrisch leitfähigen Bereich (216) elektrisch verbunden ist, wenn er in eine dritte Position gebracht wurde, so dass das Stromkreismodul (30) zusammen mit dem ersten elektrisch leitfähigen Bereich (212) des Körpers (20) über den Schalter (50) einen geschlossenen Stromkreis ausbildet und mit der externen Stromquelle elektrisch verbunden ist, damit das Stromkreismodul (30) mit Energie versorgt wird.

6. Tracker (10) nach Anspruch 5, worin das Stromkreismodul (30) weiter einen elektrisch mit einem externen Datenübermittler verbundenen Daten-Übermittlungsbereich (31) aufweist, und, worin wenn der Schalter (50) in die dritte Position gebracht wird, der Daten-Übermittlungsbereich (31) des Stromkreismoduls (30) durch den Schalter (50) mit dem externen Datenübermittler elektrisch verbunden ist, so dass positionsbezogene Daten und andere zugehörige in der Speichereinheit des Stromkreismoduls (30) gespeicherte Daten durch den Daten-Übermittlungsbereich (31) an den externen Datenübermittler übermittelt werden.

7. Tracker (10) nach einem der vorstehenden Ansprüche 2 bis 6, worin der Schalter (50) einen Stift (51) und ein elektrisch leitfähiges Element (53) aufweist, worin das elektrisch leitfähige Element (53) ein beschränkendes Loch (530), ein erstes elektrisch leitfähiges Ende (531), und ein zweites elektrisch leitfähiges Ende (532) aufweist, worin der Stift (51) ein von einer Außenseite des Körpers (20) freiliegendes Ende und ein anderes mit dem beschränkenden Loch (530) in Eingriff kommendes Ende des elektrisch leitfähigen Elementes (53) aufweist, worin das erste elektrisch leitfähige Ende (531) und das zweite elektrisch leitfähige Ende (532) des elektrisch leitfähigen Elementes (53) des Schalters (50) gegen den ersten elektrisch leitfähigen Bereich (212) bzw. den zweiten elektrisch leitfähigen Bereich (214) des Körpers (20) anliegen und sich mit diesen verbinden, wenn der Schalter (50) in die erste Position gebracht wurde, worin das erste elektrisch leitfähige Ende (531) und das zweite elektrisch leitfähige Ende (532) des elektrisch leitfähigen Elementes (53) des Schalters (50) gegen den zweiten elektrisch leitfähigen Bereich (214) bzw. den dritten elektrisch leitfähigen Bereich (216) des Körpers (20) anliegen und sich mit diesen verbinden, wenn der Schalter (50) in die zweite Position gebracht wurde, worin das erste elektrisch leitfähige Ende (531) und das zweite elektrisch leitfähige Ende (532) des elektrisch leitfähigen Elementes (53) des Schalters (50) gegen den dritten elektrisch leitfähigen Bereich (216) bzw. den ersten elektrisch leitfähigen Bereich (212) des Körpers (20) anliegen und sich mit diesen verbinden, wenn der Schalter (50) in die dritte Position gebracht wurde.

8. Tracker (10) nach Anspruch 7, worin der Schalter (50) ein vor Wasser schützendes Element (55) zum Einkapseln des Stifts (51) aufweist, worin, nachdem ein anderes Ende des Stiftes (51) des Schalters (50) durchdringend an dem Durchgangsloch (23) des Körpers (20) angeordnet wurde, das vor Wasser schützende Element (55) blockierend an einer inneren Wand des Durchgangslochs (23) des Körpers (20) befestigt ist.

9. Tracker (10) nach Anspruch 1, worin der Schalter (50) einen Stift (51) und ein elektrisch leitfähiges Element (53) aufweist, worin das elektrisch leitfähige Element (53) ein Beschränkungs-Loch (530), ein erstes elektrisch leitfähige Ende (531), und ein zweites elektrisch leitfähiges Ende (532) aufweist, worin der Stift (51)) ein von einer Außenseite des Körpers (20) freiliegendes Ende und ein anderes mit dem beschränkenden Loch (530) des elektrisch leitfähigen Elements (53) in Eingriff kommendes Ende aufweist, worin das erste elektrisch leitfähige Ende (531) und das zweite elektrisch leitfähige Ende (532) des elektrisch leitfähigen Elements (53) des Schalters (50) gegen den ersten elektrisch leitfähigen Bereich (212) bzw. den zweiten elektrisch leitfähigen Bereich (214) des Körpers (20) stoßen und sich mit diesen verbinden, wenn der Schalter (50) in die erste Position gedreht ist.

10. Tracker (10) nach Anspruch 9, worin der Schalter (50) ein vor Wasser schützendes Element (55) zum Einkapseln des Stifts (51) aufweist, worin, nachdem ein anderes Ende des Stiftes (51) des Schalters (50) durchdringend an dem Durchgangsloch (23) des Körpers (20) angeordnet wurde, das vor Wasser schützende Element (55) blockierend an einer inneren Wand des Durchgangslochs (23) des Körpers (20) befestigt ist.

11. Tracker (10A) nach Anspruch 8, worin mindestens ein Positionierungsbereich (207A) gewölbt an einer Oberfläche einer Außenseite des Körpers 20A angeordnet ist und sich in eine Tiefe darin erstreckt.

12. Tracker (10) nach Anspruch 4 oder 6, worin der Daten-Übermittlungsbereich (31) ein Daten-Empfangs-Ende (314) und eine Daten-Übertragungs-Ende (312) aufweist, welche vom dem Körper (20) freiliegen und zum Empfangen bzw. Übertragen positionsbezogener Daten und anderer zugehöriger in der Speichereinheit des Datenübermittlers gespeicherter Daten elektrisch mit dem externen Datenübermittler verbunden sind.

## Revendications

1. Enregistreur (10), comprenant :
un corps (20) ayant un espace de réception (21) et un trou traversant (23), le trou traversant (23) étant en communication avec l'espace de réception (21), le corps (20) ayant deux extrémités formant respectivement une partie pivotante (204) et une première partie de mise en prise (206), le corps (20) ayant une première partie électriquement conductrice (212) et une deuxième partie électriquement conductrice (214) disposées dans l'espace de réception (21) ;
un élément mobile (25) avec une extrémité connectée de manière pivotante aux parties pivotantes (204) du corps (20) et une autre extrémité ayant une deuxième partie de mise en prise (256) correspondant en position à la première partie de mise en prise (206) du corps (20), où la deuxième partie de mise en prise (256) et la première partie de mise en prise (206) du corps (20) sont en prise l'une avec l'autre et fixées l'une à l'autre dès que l'élément mobile (25) est connecté de manière pivotante aux parties pivotantes (204) du corps (20) ;
un module de circuit (30) disposé sur un côté dans l'espace de réception (21) du corps (20), le module de circuit (30) comprenant une unité de positionnement sans fil et une unité de mémoire, l'unité de positionnement sans fil étant conçue pour suivre et localiser l'enregistreur, des données relatives au processus, et stocker les données dans l'unité de mémoire ;
un module de source d'alimentation (40) disposé sur un autre côté dans l'espace de réception (21) du corps (20) et ayant une extrémité électriquement connectée à la deuxième partie électriquement conductrice (214) ; et
un commutateur (50) disposé au niveau du trou traversant (23) du corps (20),
où le commutateur (50) est électriquement connecté à la première partie électriquement conductrice (212) et à la deuxième partie électriquement conductrice (214) lorsqu'on le fait pivoter vers une première position de sorte que le module de source d'alimentation (40) forme une boucle électrique conjointement avec la première partie électriquement conductrice (212) du corps (20) par l'intermédiaire du commutateur (50) et est électriquement connecté à une source d'alimentation électrique externe.

2. Enregistreur (10) selon la revendication 1, où le corps (20) a une troisième partie électriquement conductrice (216), et le commutateur (50) est électriquement connecté à la deuxième partie électriquement conductrice (214) et à la troisième partie électriquement conductrice (216) lorsqu'on le fait pivoter vers une deuxième position de sorte que le module de source d'alimentation (40) forme une boucle électrique conjointement avec le module de circuit (30) par l'intermédiaire du commutateur (50), fournissant ainsi de l'énergie au module de circuit (30).

3. Enregistreur (10) selon la revendication 2, où une extrémité du module de circuit (30) est électriquement connectée à la troisième partie électriquement conductrice (216), et le commutateur (50) est électriquement connecté à la première partie électriquement conductrice (212) et à la troisième partie électriquement conductrice (216) lorsqu'on le fait pivoter vers une troisième position de sorte que le module de circuit (30) forme une boucle électrique conjointement avec la première partie électriquement conductrice (212) du corps (20) par l'intermédiaire du commutateur (50) et est électriquement connecté à la source d'alimentation électrique externe, fournissant ainsi de l'énergie au module de circuit (30).

4. Enregistreur (10) selon la revendication 3, où le module de circuit (30) a en outre une partie de transmission de données (31) électriquement connectée à un émetteur de données externe, et la partie de transmission de données (31) du module de circuit (30) est électriquement connectée à l'émetteur de données externe par l'intermédiaire du commutateur (50) lorsqu'on fait pivoter le commutateur (50) vers la troisième position de sorte que des données relatives à la position et d'autres données associées stockées dans l'unité de mémoire du module de circuit (30) soient transmises à l'émetteur de données externe par l'intermédiaire de la partie de transmission de données (31).

5. Enregistreur (10) selon la revendication 1, où le corps (20) a une troisième partie électriquement conductrice (216), et le commutateur (50) est électriquement connecté à la première partie électriquement conductrice (212) et à la troisième partie électriquement conductrice (216) lorsqu'on le fait pivoter vers une troisième position de sorte que le module de circuit (30) forme une boucle électrique conjointement avec la première partie électriquement conductrice (212) du corps (20) par l'intermédiaire du commutateur (50) et est électriquement connecté à la source d'alimentation électrique externe, fournissant ainsi de l'énergie au module de circuit (30).

6. Enregistreur (10) selon la revendication 5, où le module de circuit (30) a en outre une partie de transmission de données (31) électriquement connectée à un émetteur de données externe, et, lorsqu'on fait pivoter le commutateur (50) vers la troisième position, la partie de transmission de données (31) du module de circuit (30) est électriquement connectée à l'émetteur de données externe par l'intermédiaire du commutateur (50) de sorte que des données relatives à la position et d'autres données associées stockées dans l'unité de mémoire du module de circuit (30) soient transmises à l'émetteur de données externe par l'intermédiaire de la partie de transmission de données (31).

7. Enregistreur (10) selon l'une quelconque des revendications 2 à 6, où le commutateur (50) a une tige (51) et un élément électriquement conducteur (53), l'élément électriquement conducteur (53) ayant un trou de limitation (530), une première extrémité électriquement conductrice (531) et une deuxième extrémité électriquement conductrice (532), la tige (51) ayant une extrémité exposée à partir d'un côté externe du corps (20) et une autre extrémité en prise avec le trou de limitation (530) de l'élément électriquement conducteur (53), où la première extrémité électriquement conductrice (531) et la deuxième extrémité électriquement conductrice (532) de l'élément électriquement conducteur (53) du commutateur (50) viennent en butée contre respectivement la première partie électriquement conductrice (212) et la deuxième partie électriquement conductrice (214) du corps (20), et se connectent à celles-ci, lorsqu'on fait pivoter le commutateur (50) vers la première position, où la première extrémité électriquement conductrice (531) et la deuxième extrémité électriquement conductrice (532) de l'élément électriquement conducteur (53) du commutateur (50) viennent en butée contre respectivement la deuxième partie électriquement conductrice (214) et la troisième partie électriquement conductrice (216) du corps (20), et se connectent à celles-ci, lorsqu'on fait pivoter le commutateur (50) vers la deuxième position, où la première extrémité électriquement conductrice (531) et la deuxième extrémité électriquement conductrice (532) de l'élément électriquement conducteur (53) du commutateur (50) viennent en butée contre respectivement la troisième partie électriquement conductrice (216) et la première partie électriquement conductrice (212) du corps (20), lorsqu'on fait pivoter le commutateur (50) vers la troisième position.

8. Enregistreur (10) selon la revendication 7, où le commutateur (50) a un élément étanche à l'eau (55) pour enfermer la tige (51), où, après qu'une autre extrémité de la tige (51) du commutateur (50) a été disposée de manière pénétrante au niveau du trou traversant (23) du corps (20), l'élément étanche à l'eau (55) est fixé par blocage à une paroi interne du trou traversant (23) du corps (20).

9. Enregistreur (10) selon la revendication 1, où le commutateur (50) a une tige (51) et un élément électriquement conducteur (53), l'élément électriquement conducteur (53) ayant un trou de limitation (530), une première extrémité électriquement conductrice (531) et une deuxième extrémité électriquement conductrice (532), la tige (51) ayant une extrémité exposée à partir d'un côté externe du corps (20) et une autre extrémité en prise avec le trou de limitation 530 de l'élément électriquement conducteur (53), où la première extrémité électriquement conductrice (531) et la deuxième extrémité électriquement conductrice (532) de l'élément électriquement conducteur (53) du commutateur (50) viennent en butée contre respectivement la première partie électriquement conductrice (212) et la deuxième partie électriquement conductrice (214) du corps (20), et se connectent à celles-ci, lorsqu'on fait pivoter le commutateur (50) vers la première position.

10. Enregistreur (10) selon la revendication 9, où le commutateur (50) a un élément étanche à l'eau (55) pour enfermer la tige (51), où, après qu'une autre extrémité de la tige (51) du commutateur (50) a été disposée de manière pénétrante au niveau du trou traversant (23) du corps (20), l'élément étanche à l'eau (55) est fixé par blocage à une paroi interne du trou traversant (23) du corps (20).

11. Enregistreur (10A) selon la revendication 8, où au moins une partie de positionnement (207A) est disposée de manière concave sur une surface d'un côté externe du corps 20A et s'étend dans une profondeur de celui-ci.

12. Enregistreur (10) selon la revendication 4 ou 6, où la partie de transmission de données (31) a une extrémité de réception de données (314) et une extrémité de transmission de données (312) qui sont exposées à partir du corps (20) et électriquement connectées à l'émetteur de données externe pour respectivement recevoir et transmettre des données relatives à la position et d'autres données associées stockées dans l'unité de mémoire à l'émetteur de données.
